# EUROPÄISCHE PATENTSCHRIFT

(11) **EP 0 733 014 B1**
(45) Veröffentlichungstag und Bekanntmachung des Hinweises auf die Patenterteilung: **08.07.1998**
(21) Anmeldenummer: 95901269.1
(22) Anmeldetag: 06.12.1994
(51) Int. Cl.: B65D 65/46, A23P 1/08, A21D 13/00

(54) **VERFAHREN ZUR HERSTELLUNG VON VERROTTBAREN, DÜNNWANDIGEN FORMKÖRPERN AUF STÄRKEBASIS**
PROCESS FOR PRODUCING A DECOMPOSABLE THIN-WALLED MOLDED ARTICLE BASED ON STARCH
PROCEDE DE FABRICATION DE CORPS PROFILES A PAROIS MINCES, DEGRADABLES, A BASE D'AMIDON

(30) Priorität: 06.12.1993 AT 2467/93
(43) Veröffentlichungstag der Anmeldung: 25.09.1996
(73) Patentinhaber: FRANZ HAAS WAFFELMASCHINEN INDUSTRIEGESELLSCHAFT M.B.H., 1210 Wien (AT)
(72) Erfinder: TIEFENBACHER, Karl, A-1170 Wien (AT); HAAS, Franz, sen., A-1210 Wien (AT); HAAS, Johann, A-3400 Klosterneuburg (AT)
(74) Vertreter: Berger, Erhard, Dr.
(86) Internationale Anmeldenummer: AT9400189
(87) Internationale Veröffentlichungsnummer: WO9515894

(56) Entgegenhaltungen:
- EP-A- 0 376 201
- EP-A- 0 608 031
- WO-A-93/19125
- US-A- 4 133 784
- US-A- 5 320 669

## Beschreibung

Die vorliegende Erfindung betrifft ein Verfahren zur Herstellung von verrottbaren, dünnwandigen Formkörpern, wie z.B. Bechern, Tellern, Fast-Food-Verpackungen, Trays, ebenen Blättern u.dgl., durch Aufbringen einer Backmasse auf Stärkebasis auf den unteren Formteil einer mehrteiligen, vorzugsweise zweiteiligen Form, wobei man, um ein zähes, festes, hohe mechanische Stabilität aufweisendes Produkt zu erhalten, eine aus Wasser, einer od. mehreren Stärken, Stärkeprodukten und/oder Mehl oder Mehlgemischen, einem Trennmittel, nämlich eine oder mehrere mittel- oder langkettige, gegebenenfalls substituierte Fettsäuren und/oder deren Salze und/oder deren Säurederivate, z.B. Säureamide und/oder ein Polymethylhydrogensiloxan und gegebenenfalls Verdickungsmittel, wie Quellstärke, vorverkleisterte Stärke od. Backabfall, und/oder Guar-Mehl, Pektin, Johannisbrotkernmehl, Carboxymethylcellulose und/oder Gummi arabicum; Faserstoffe, wie cellulosereiche Rohstoffe, pflanzliche Rohstoffe, Fasern aus Kunststoff, Glas, Metall und Kohlenstoffe; nicht faserförmige Füllstoffe, wie Calciumcarbonat, Kohle, Talkum, Titandioxid, Kieselgel, Aluminiumoxid, Schellack, Sojaeiweiß, pulv., Weizenkleber, pulv., Hühnereiweiß, pulv., Casein, pulv. und Caseinat, pulv.; Farbstoffe; Konservierungsmittel, und Antioxidantien, bereitete, im wesentlichen fettfreie Backmasse einsetzt, die die Form ausfüllende Backmasse ausbackt, und das erhaltene Produkt durch Konditionieren auf einen Feuchtigkeitsgehalt von 6 Gew.-% bis 22 Gew.-% einstellt.

Ein solches Verfahren ist in der EP-B1 513 106 beschrieben. Bei der Herstellung der Formkörper nach diesem Verfahren wird durch die Verwendung von Stärke bzw. Stärkederivaten mit deren Verkleisterung die verbindende Struktur gebildet. Die Einlagerung von Füllstoffen bzw. Faserstoffen dient, wie aus der Verstärkung von Kunststoffen her bekannt ist, zur Verbesserung der mechanischen Eigenschaften.

Der Mitverwendung besonders stark wasserabsorbierender Faserstoffe, etwa von Cellulose, Hemicellulose, Kartoffelfasern, Rübenschnitzel u.ä., waren bisher durch die hohe Wasserbindung Grenzen gesetzt. So nehmen beispielsweise Cellulosefasern ein Mehrfaches (5-10faches) an Wasser auf, ohne noch in Verbindung mit Stärke, eine fließfähige Masse oder zumindest einen plastischen Teig, zu ergeben.

Die Verdampfung dieser großen Wasseranteile während des Strukturbildungsvorganges führt zu übermäßig porösen Formkörpern oder aber zu Riß- bzw. Hohlraumbildung.

Andererseits sind die strukturverstärkenden, flexibilitäts- und reißfestigkeitserhöhenden Wirkungen der Faserstoffe erwünscht. Weiters stehen, was speziell Cellulose aber auch die Faserstoffe aus der Verarbeitung landwirtschaftlicher Produkte betrifft, diese kostengünstiger zur Verfügung als Stärke und Stärkederivate.

Ein Weg diesen Wasserbedarf etwas zu reduzieren, ist die Verwendung von weniger saugfähigen Fasern, wie z.B. Altpapierfasern, doch auch hier ist eine weitere Reduktion der Wassersorption wünschenswert.

Es hat sich nun überraschenderweise gezeigt, daß größere Anteile an hydrophilen pflanzlichen Fasern, wie Cellulose, Hemicellulose, Kartoffelfasern, Rübenschnitzel u.ä. dann eingesetzt werden können, und gleichzeitig ein erheblicher Anteil an Stärke bzw. Stärkeprodukten eingespart werden kann, wenn die pulverförmigen Fasern mit dem Trennmittel intensiv trocken vorgemischt werden. "Pulverförmig" bedeutet im vorliegenden Fall folgendes: Die Cellulosefasern müssen im wesentlichen freifließend, d.h. lufttrocken sein um mit dem hydrophoben Emulgator Metallstearat innig vermischbar zu sein. Die Faserlänge ist 2 mm oder kürzer. Kürzere Faserlängen sind aus produktionstechnischen Gründen (Verstopfen der Ausdampföffnungen) erwünscht und auch kurze Fasern geben - im molekularen Maßstab gesehen - noch immer einen Faserverstärkungseffekt.

Der Trennmittelanteil sollte dabei mindestens 5 Gewichtsprozent, maximal 26 Gewichtsprozent, vorzugsweise 10 - 20 Gewichtsprozent des Celluloseanteils betragen.

Die Mischzeit ist von der Mischintensität des verwendeten Trockenmischers abhängig. Als Mindestmischzeit kann die Zeit gelten, in der unter den aktuellen Versuchsbedingungen ein Anteil von 0,1 Gewichtsprozent Aktivkohle optisch homogen eingemischt wird. Eine zumindest doppelt solange Mischzeit wird empfohlen.

Durch diese Vorgangsweise ergeben sich - bei sonst gleicher Art und Weise der Backmassenbereitung
1. Wasser
2. Füllstoffe, Stärke, vorgemischt mit Verdickungsmittel
3. Mischung - Faserstoff/Trennmittel
zwei signifikante Unterschiede:
1. Der Wasserbedarf für den Faserstoff wird reduziert und beträgt weniger als das 4-fache des Faserstoffgewichts.
2. Der Kontaktwinkel der Backmasse bei der Dosierung in die Backformen ist erhöht.

Beides sind Voraussetzungen bzw. Indikatoren für eine gleichmäßige Strukturbildung durch nicht zu frühes, gleichmäßiges Verdampfen nicht zu großer Wassermengen.

Der Wasserbedarf in diesen Rezepten ist zwar gegenüber Formulierungen mit geringerem Anteil stark absorbierender Fasern noch erhöht. Dadurch kann jedoch eine Reduktion der Stärkebestandteile erreicht werden, sogar bis zum Überwiegen der Faseranteile.

Ohne einen Mechanismus mit Sicherheit angeben zu können, steht doch zu vermuten, daß durch die "Bereitstellung" von erhöhten Wasseranteilen in der Backmasse eine weitergehende bzw. vollständigere Verkleisterung der Stärke erfolgt. Verkleisterte Stärke ist aber das im wesentlichen strukturverbindende Element solcher Formkörper.

Im Vergleich zu den in EP-B1 513 106 beschriebenen Formkörpern ergeben sich keine wesentlichen Veränderungen in der Dichte und der isolierenden Wirkung des geschäumten Materials. In der Tendenz können aber leichtere und damit materialsparendere Produkte mit guter Gebrauchsfestigkeit hergestellt werden.

Vorteilhaft ist es, der Backmasse zusätzlich Polyvinylalkohol zuzusetzen. Die starke Wasserbindung des PVA trägt auch dazu bei, ein fließfähiges oder zumindest plastisches Gemisch mit den stark wasserabsorbierenden Fasern, ohne daß diese, wie sonst, selbst zuviel Wasser aufnehmen können, zu erhalten.

Das Ausbacken erfolgt bei Temperaturen, die vorzugsweise im Bereich von 155 - 220°C, bei zumeist verschlechterter Ausführung auch bei 145 - 155 bzw. 220 - 230°C liegen. Die Backzeit ist von der Wandstärke der Form und der Backtemperatur abhängig und kann zwischen 25 sek. und mehreren Minuten betragen, vorzugsweise 40 bis 230 sek.

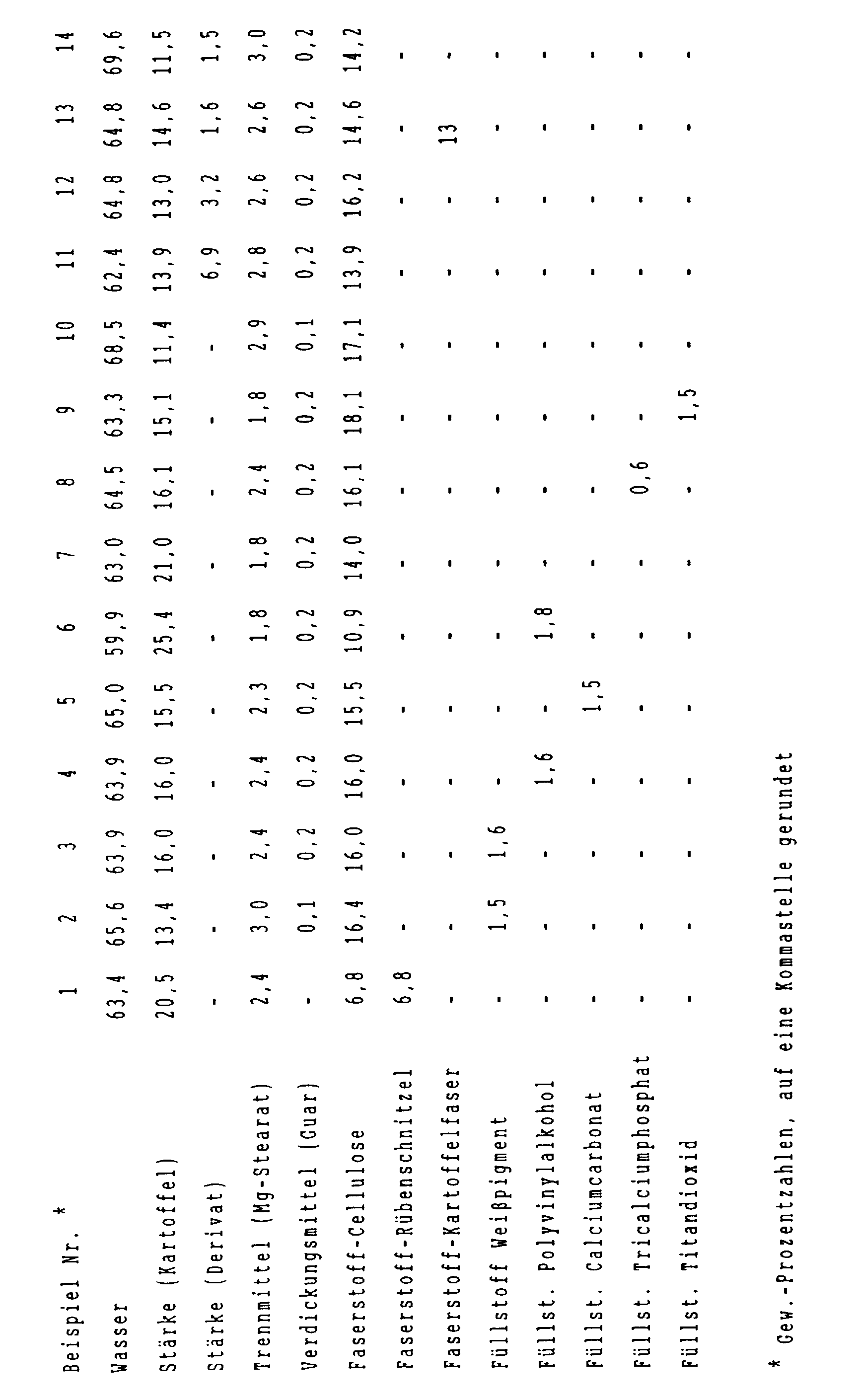

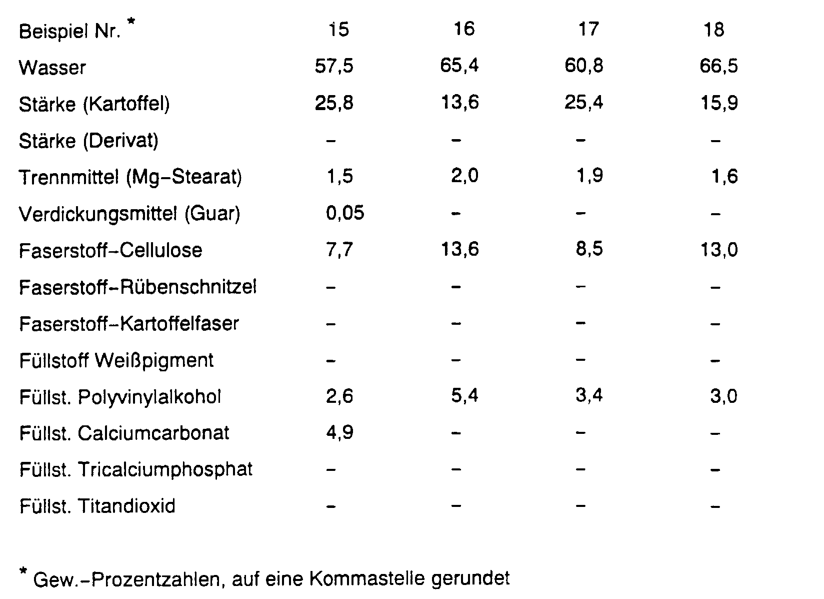

Verwendete Typen von Polyvinylalkohol:

| | | |
|---|---|---|
| Beispiel 4 | Airvol | 823 (Air Products) |
| Beispiel 6 | Airvol | 523 S |
| Beispiel 15 | Airvol | 823 |
| Beispiel 16 | Mowiol | 10-98 (Hoechst) |
| Beispiel 17 | Mowiol | 28-99 |
| Beispiel 18 | Mowiol | 26-88 |
| Beispiel 19 | Mowiol | 28-99 |
| Beispiel 20 | Mowiol | 28-99 |

## Patentansprüche

1. Verfahren zur Herstellung von verrottbaren, dünnwandigen Formkörpern, wie z.B. Bechem, Tellern, Fast-Food-Verpackungen, Trays, ebenen Blättern u.dgl. durch Aufbringen einer Backmasse auf Stärkebasis auf den unteren Formteil einer mehrteiligen, vorzugsweise zweiteiligen Form, wobei man, um ein zähes, festes, hohe mechanische Stabilität aufweisendes Produkt zu erhalten, eine aus Wasser, einer oder mehreren Stärken, Stärkeprodukten und/oder Mehl oder Mehlgemischen, einem Trennmittel, nämlich eine oder mehrere mittel- oder langkettige, gegebenenfalls substituierte Fettsäuren und/oder deren Salze und/oder deren Säurederivate, z.B. Säureamide und/oder ein Polymethylhydrogensiloxan und gegebenenfalls Verdickungsmittel, wie Quellstärke, vorverkleisterte Stärke oder Backabfall, und/oder Guar-Mehl, Pektin, Johannisbrotkernmehl, Carboxymethylcellulose und/oder Gummi arabicum; Faserstoffe, wie cellulosereiche Rohstoffe, pflanzliche Rohstoffe, Fasern aus Kunststoff, Glas, Metall und Kohlenstoffe; nicht faserförmige Füllstoffe, wie Calciumcarbonat, Kohle, Talkum, Titandioxid, Kieselgel, Aluminiumoxid, Schellack, Sojaeiweiß, pulv., Weizenkleber, pulv., Hühnereiweiß, pulv., Casein, pulv. und Caseinat, pulv.; Farbstoffe; Konservierungsmittel, und Antioxidantien, bereitete, im wesentlichen fettfreie Backmasse einsetzt, die die Form ausfüllende Backmasse ausbackt, und das erhaltene Produkt durch Konditionieren auf einen Feuchtigkeitsgehalt von 6 Gew.-% bis 22 Gew.-% einstellt, dadurch gekennzeichnet, daß die Backmasse 45,0 bis 68,5 Gew.-%, vorzugsweise 48,0 bis 65,0 Gew.-% Wasser, 11,4 bis 45 Gew.-%, vorzugsweise 15 bis 40 Gew.-% Stärke oder Stärkeprodukt, 0,05 bis 11 Gew.-%, vorzugsweise 0,1 bis 4,2 Gew.-% Trennmittel und 1,0 bis 17,5 Gew.-%, vorzugsweise 2 bis 16 Gew.-% hydrophile pflanzliche Fasern, wie Cellulose, Hemicellulose, Kartoffelfasern, Rübenschnitzel u.ä. enthält, wobei die pulverförmigen Fasern mit dem Trennmittel trocken vorgemischt werden.

2. Verfahren nach Anspruch 1, dadurch gekennzeichnet, daß die Backmasse zusätzlich Polyvinylalkohol enthält.

3. Verfahren nach Anspruch 2, dadurch gekennzeichnet, daß die Backmasse 1,6 bis 5,4 Gew.-% Polyvinylalkohol enthält.

## Claims

1. A process for manufacturing compostible thin-walled molded articles such as cups, plates, fast-food packaging, trays, flat sheets and the like, by applying a starch-based baking composition on the lower part of a multipart, preferably bipartite mold, using an essentially fat-free baking composition to obtain a tough, durable article of high mechanical stability the baking composition being prepared from: water, at least one starch, starch products and/or flour or flour mixtures, a release agent, selected from one or more medium- or long-chain, optionally substituted fatty acids and/or salts thereof and/or acid derivatives thereof, e.g. acid amides and/or a polymethylhydrogen siloxane and optionally thickening agents such as swell-starch, pregelatinized starch or baking wastes, and/or guar gum, pectin, carob gum, carboxymethylcellulose and/or gum arabic, fibrous materials such as high-cellulose raw materials, vegetable raw materials, fibers of plastics, glass, metal and carbon; non-fibrous fillers such as calcium carbonate, carbon, talc, titanium dioxide, silica gel, alumina, shellac, soybean protein powder, wheat gluten powder, chicken egg protein powder, casein powder, caseinate powder; colorants; preservatives and antioxidants, by baking the baking composition filling the mold, and by conditioning the resulting product to establish a moisture content of 6-22 % by weight, characterized in that the baking composition contains 45,0 - 68,5 % by weight, preferably 48,0 - 65,0 % by weight, water, 11,4 - 45 % by weight, preferably 15 - 40 % by weight, starch or starch product, 0,05 - 11 % by weight, preferably 0,1 - 4,2 % by weight, release agent, and 1,0 - 17,5 % by weight, preferably 2 - 16 % by weight hydrophilic vegetable fiber, such as cellulose, hemicellulose, potato fiber, shredded beet and the like, the powdered fiber being premixed in the dry state with the release agent.

2. The process according to claim 1, characterized in that the baking composition additionally contains polyvinyl alcohol.

3. The process according to claim 2, characterized in that the baking composition contains 1,6 - 5,4 % by weight polyvinyl alcohol.

## Revendications

1. Procédé de fabrication d'articles moulés à parois minces pourrissables, comme, par exemple, des tasses, des assiettes, des emballages pour aliments pour restauration rapide, de plateaux, de feuilles planes, et analogues, par l'application d'une masse à cuire à base d'amidon sur la pièce de moulage inférieure d'un moule en plusieurs pièces, de préférence en deux pièces, conformément auquel on utilise, en vue d'obtenir un produit tenace, solide, présentant une stabilité mécanique élevée, une masse à cuire essentiellement dépourvue de graisse préparée à partir d'eau, d'un ou plusieurs amidons, produits à base d'amidon et/ou de farine ou mélange de farines, d'un agent de démoulage, notamment un ou plusieurs acides gras à chaîne moyenne ou à longue chaîne, éventuellement substitués et/ou de leurs sels et/ou de leurs dérivés d'acides, par exemple des amides d'acides et/ou d'un polyméthylhydrogénosiloxane et éventuellement d'agents épaississants, comme de l'amidon gonflant, de l'amidon prégélatinisé ou des résidus de cuisson et/ou de la farine de gomme guar, de la pectine, de la farine de grains de caroube, de la carboxyméthylcellulose et/ou de la gomme arabique; des fibres, comme des matières premières riches en cellulose, des matières premières végétales, des fibres en matière plastique, en verre, en métal et en carbone; des charges non fibreuses, comme le carbonate de calcium, le charbon, le talc, le dioxyde de titane, le gel de silice, l'oxyde d'aluminium, le shellac, des protéines de soja, des colles de blé pulvérulentes, des protéines de volaille pulvérulentes, de la caséine pulvérulente, et du caséinate pulvérulent; des colorants; des conservateurs, et des antioxydants, on cuit la masse à cuire qui remplit le moule, et on règle la teneur en humidité du produit obtenu par conditionnement à une valeur qui varie de 6% en poids à 22% en poids, caractérisé en ce que la masse à cuire contient de 45,0 à 68,5% en poids, de préférence, de 48,0 à 65,0% en poids d'eau, de 11,4 à 45% en poids, de préférence, de 15 à 40% en poids, d'amidon ou d'un produit à base d'amidon, de 0,05 à 11% en poids, de préférence, de 0,1 à 4,2% en poids, d'agent de démoulage et de 1,0 à 17,5% en poids, de préférence, de 2 à 16% en poids, de fibres végétales hydrophiles, comme la cellulose, l'hémicellulose, des fibres de pomme de terre, des cossettes de betteraves, et analogues, où on mélange au préalable à sec les fibres pulvérulentes et l'agent de démoulage.

2. Procédé suivant la revendication 1, caractérisé en ce que la masse à cuire contient complémentairement du poly(alcool vinylique).

3. Procédé suivant la revendication 2, caractérisé en ce que la masse à cuire contient de 1,6 à 5,4% en poids de poly(alcool vinylique).
